# EUROPÄISCHE PATENTSCHRIFT

(11) **EP 1 317 984 B1**
(45) Veröffentlichungstag und Bekanntmachung des Hinweises auf die Patenterteilung: **19.05.2004**
(21) Anmeldenummer: 01129162.2
(22) Anmeldetag: 08.12.2001
(51) Int. Cl.: B23D 77/00

(54) **Reibahlen-Vorrichtung mit Entgratungsfunktion**
Reamer-deburrer
Alesoir avec moyens pour l'ébavurage

(43) Veröffentlichungstag der Anmeldung: 11.06.2003
(73) Patentinhaber: Blickle GmbH, 72419 Neufra / Hohenzollern (DE)
(72) Erfinder: Heck, Klaus, 72414 Rangendingen (DE); Grotz, Thomas, 72459 Albstadt (DE); Lude, Fritz, 72419 Neufra/Hohenzollern (DE)
(74) Vertreter: Kiessling, Christian

(56) Entgegenhaltungen:
- EP-A- 0 122 176
- DE-C- 443 306

## Beschreibung

Die Erfindung betrifft eine Reibahlen-Vorrichtung mit einem Schaft sowie einem in einem Umfangbereich des Schaftes ausgebildeten und eine Mehrzahl von Schneidzähnen aufweisenden Kopf gemäß Oberbegriff der Anspruchs 1. Eine solche Vorrichtung ist aus der EP-A-0 122 176 bekannt.

Reibahlen-Vorrichtungen der eingangs genannten Art werden in der Regel für eine Feinbearbeitung von Innenbohrungen verwendet und sind im Stand der Technik in unterschiedlichen Ausführungen bekannt. Bei der Bearbeitung von Metallkörpern besteht ein häufig vorkommendes Problem bei der Herstellungen von Querbohrungen, die unter einem vorgegebenen Winkel in eine Hauptbohrung münden, darin, dass im Mündungsbereich der Querbohrung in der Hauptbohrung ein Grat aufgeworfen wird, der sich bei Belastung ablösen kann und dann in diesem und anderen Bauteilen wie Düsen, Passungen und Dichtungsstellen einen vorzeitigen Verschleiß bis hin zum Funktionsausfall verursachen kann. Die bekannten Reibahlen werden auch zur Beseitigung derartiger Grate verwendet.

Es hat sich jedoch gezeigt, dass eine Gratentfernung eines im Mündungsbereich einer Querbohrung zu einer Hauptbohrung befindlichen Grates mit Hilfe der herkömmlichen Reibahlen arbeitsintensiv und zweitaufwendig ist, da eine entsprechende Reibahle insgesamt zweimal von unterschiedlichen Seiten eines Hauptrohres angesetzt werden muss, da die herkömmlichen Reibahlen lediglich mit Schneidzähnen versehen sind, die Schneidkanten aufweisen, die ein Schneiden in jeweils nur eine Richtung ermöglichen. Bei Ansetzen einer derartigen Reibahle an den Innengrat eines Hauptrohres wird somit jeweils lediglich eine Hälfte eines einen in sich geschlossenen Wall bildenden Innengrates entfernt und die andere Hälfte in der Regel in die Höhlung der Querbohrung zurückgeschoben. Die andere Hälfte muss deshalb in einem weiteren Arbeitsgang aus der Querbohrung wieder in die Hauptbohrung zurückgeschoben werden, wonach durch erneutes Ansetzen der Reibahle von der anderen Seite der Öffnung der Hauptbohrung her die verbliebene Innengrathälfte aus der Hauptbohrung entfernbar ist.

Aufgabe der Erfindung ist es deshalb, eine Reibahlen-Vorrichtung zu schaffen, bei der die Schneidstollen in Richtung auf eine Innenwandung einer Bohrung vorspannbar sind.

Diese Aufgabe wird durch eine Reibahlen-Vorrichtung gemäß Anspruch 1 gelöst.

Bevorzugte Ausführungsformen der Erfindung sind Gegenstand der Unteransprüche.

Durch die Merkmale, dass jeder Schneidzahn als jeweils mit zwei Schneidkanten versehener Schneidstollen ausgebildet ist, dessen jeweils eine Schneidkante rechtsdrehend und dessen jeweils andere Schneidkante linksdrehend ausgebildet ist, wird erreicht, dass eine Vorrichtung geschaffen ist, bei der eine Gratentfernung eines im Mündungsbereich einer Querbohrung zu einer Hauptbohrung befindlichen Grates dadurch ermöglicht ist, dass die Reibahle sukzessiv zuerst in eine Richtung und anschließend in die andere Richtung gedreht wird.

Gemäß einer ersten bevorzugten Ausführungsform der erfindungsgemäßen Vorrichtung ist vorgesehen, dass jede Schneidkante geradlinig ausgebildet ist. Vorzugsweise ist dabei jede Schneidkante parallel zur Längsachse des Schaftes ausgebildet. Dadurch wird eine gleich gute Schneidqualität bei Verwendung sowohl der rechtsdrehenden als auch der linksdrehenden Schneidkante erreicht.

Gemäß einer anderen bevorzugten Ausführungsform der erfindungsgemäßen Vorrichtung ist vorgesehen, dass jeder Schneidstollen symmetrisch bezüglich einer radialen Symmetrieachse ausgebildet ist. Auch dadurch wird eine gleich gute Schneidqualität bei Verwendung sowohl der rechtsdrehenden als auch der linksdrehenden Schneidkante erreicht. Gleichzeitig ist der Schneidstollen auf diese Weise leicht herstellbar.

Gemäß einer weitern bevorzugten Ausführungsform der erfindungsgemäßen Vorrichtung ist vorgesehen, dass zwischen jeweils zwei sich gegenüberstehender Schneidkanten benachbarter Schneidstollen ein symmetrisch bezüglich einer radialen Symmetrieachse ausgebildeter Spannraum vorgesehen ist. Auch diese Maßnahme wirkt dahingehend, eine gleich gute Schneidqualität bei Verwendung sowohl der rechtsdrehenden als auch der linksdrehenden Schneidkante zu erreichen.

Des weiteren ist es gemäß bevorzugter Ausführungsformen der erfindungsgemäßen Vorrichtung vorgesehen, dass zwischen jeweils zwei Schneidkanten des gleichen Schneidstollens ein symmetrisch bezüglich einer radialen Symmetrieachse ausgebildeter Hinterschliff vorgesehen ist. Auch diese Maßnahme stellt eine gleich gute Schneidqualität bei Verwendung sowohl der rechtsdrehenden als auch der linksdrehenden Schneidkante sicher.

Insbesondere ist es vorteilhaft da von besonderer mechanischer Stabilität und einfacher Herstellbarkeit, wenn drei Schneidstollen vorgesehen sind. Prinzipiell können aber auch mehr Schneidstollen vorgesehen sein.

Gemäß einer bevorzugten Ausführungsform der erfindungsgemäßen Vorrichtung ist vorgesehen, dass die schlitzförmigen Aussparungen dabei eine solche Länge aufweisen, dass ein betreffender Schneidstollen durch Einführen eines entsprechend geformten hartelastischen Kunststoffmaterials in radialer Richtung des Schaftes vorspannbar ist. Als hartelastisches Kunststoffmaterial hat sich dabei insbesondere NIPOLAN bewährt.

Gemäß einer weiteren bevorzugten Ausführungsform der erfindungsgemäßen Vorrichtung ist vorgesehen, dass der Durchmesser des Schaftes mindestens teilweise geringer als der Durchmesser des Kopfes ausgebildet ist. Dadurch ist es ermöglicht, den Kopf so weit durch eine zu bearbeitende Hauptbohrung vorzuschieben, dass ein Bereich des Schaftes vor einer Querbohrungsmündung zu liegen kommt, der einen geringeren Durchmesser als der Kopf aufweist, so dass es ermöglicht ist, eine Innengrathälfte, die bei einer vorausgegangenen Innengratbearbeitung in die Höhlung der Querbohrung zurückgeschoben wurde, mittels eines durch die Querbohrung zu schiebenden Werkzeuges wieder in die Hauptbohrung zu schieben, so dass sie bei einer erneuten Innengratbearbeitung mittels der erfindungsgemäßen Reibahle dann restlos entfernt werden kann.

Der Kopf der erfindungsgemäßen Reibahle ist dabei vorzugsweise im Bereich eines Endes des Schaftes vorgesehen derart, dass der Kopf an eine Stirnfläche des Schaftes angrenzt, wobei die Stirnfläche insbesondere in ihrem Randbereich, in dem sie in den Kopf übergeht, abgerundet ausgebildet ist. Dadurch werden Beschädigungen der Innenwandung von Bohrungen vermieden, in die der Kopf der erfindungsgemäßen Reibahle eingeführt wird.

Der Kopf ist darüber hinaus vorzugsweise auch im Bereich seines der Stirnfläche gegenüberliegenden Endes abgerundet ausgebildet, so dass auch Beschädigungen der Innenwandung von Bohrungen vermieden werden, wenn der Kopf der erfindungsgemäßen Reibahle aus einer Bohrung hinaus und anschließend für einen weiteren Arbeitsgang wieder zurück geschoben wird.

Die erfindungsgemäße Reibahlen-Vorrichtung wird im folgenden anhand einer bevorzugten Ausführungsform erläutert, die in den Figuren der Zeichnung dargestellt ist. Darin zeigen:
- Fig.1: eine bevorzugte Ausführungsform der erfindungsgemäßen Reibahlen-Vorrichtung in einer Seitenansicht;
- Fig.2: den Kopf der in Figur 1 dargestellten Ausführungsform der erfindungsgemäßen Reibahlen-Vorrichtung in einer Seitenansicht;
- Fig.3: den in Figur 2 dargestellten Kopf in einer Querschrittsansicht entlang der Linie A - A;
- Fig.4: eine weitere bevorzugte Ausführungsform eines Kopfes in einer Querschnittsansicht.

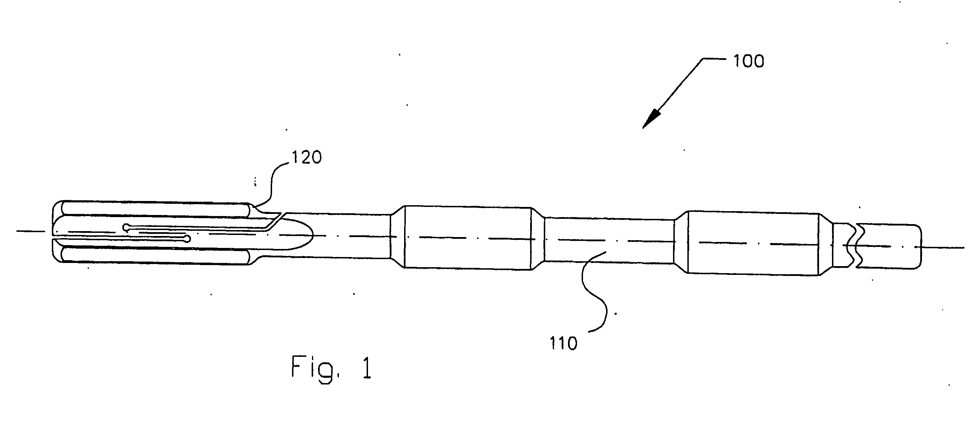

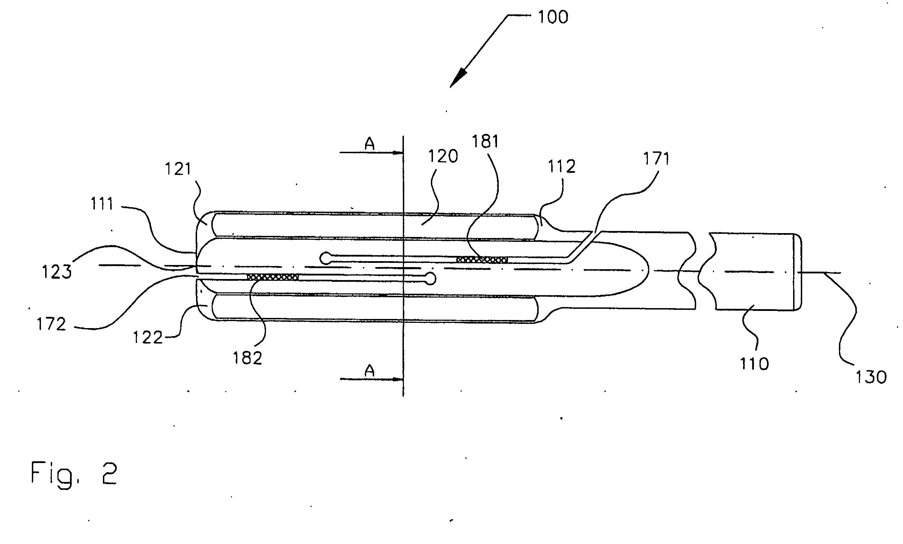

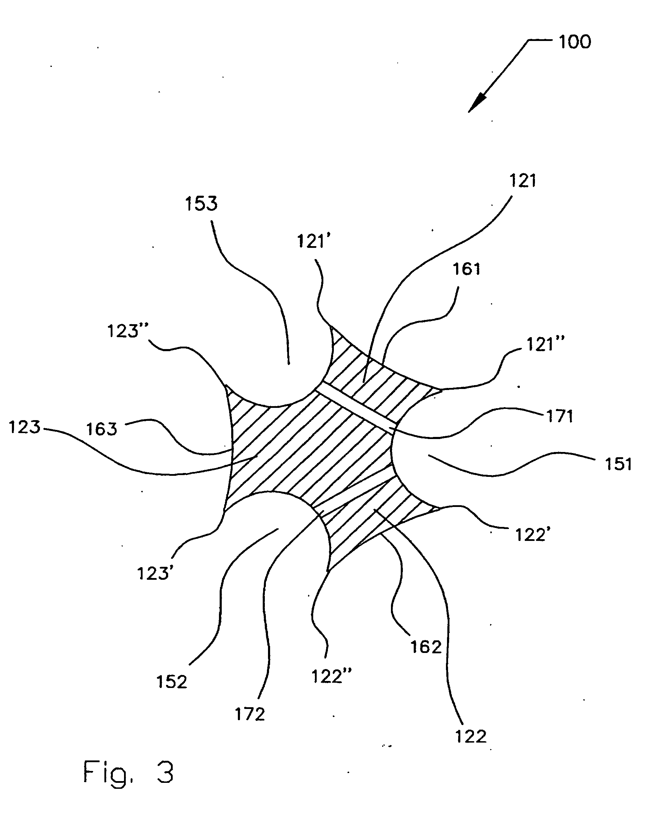

Die in den Figuren 1 bis 3 dargestellte erfindungsgemäße Reibahlen-Vorrichtung 100 weist einen Schaft 110 sowie einen in einem Umfangbereich des Schaftes 110 ausgebildeten und eine Mehrzahl von Schneidzähnen 121, 122, 123 aufweisenden Kopf 120 auf, wobei jeder Schneidzahn 121, 122, 123 als jeweils mit zwei Schneidkanten 121',121''; 122',122''; 123',123'' versehener Schneidstollen ausgebildet ist, dessen jeweils eine Schneidkante 121'; 122'; 123' rechtsdrehend und dessen jeweils andere Schneidkante 121''; 122''; 123'' linksdrehend ausgebildet ist.

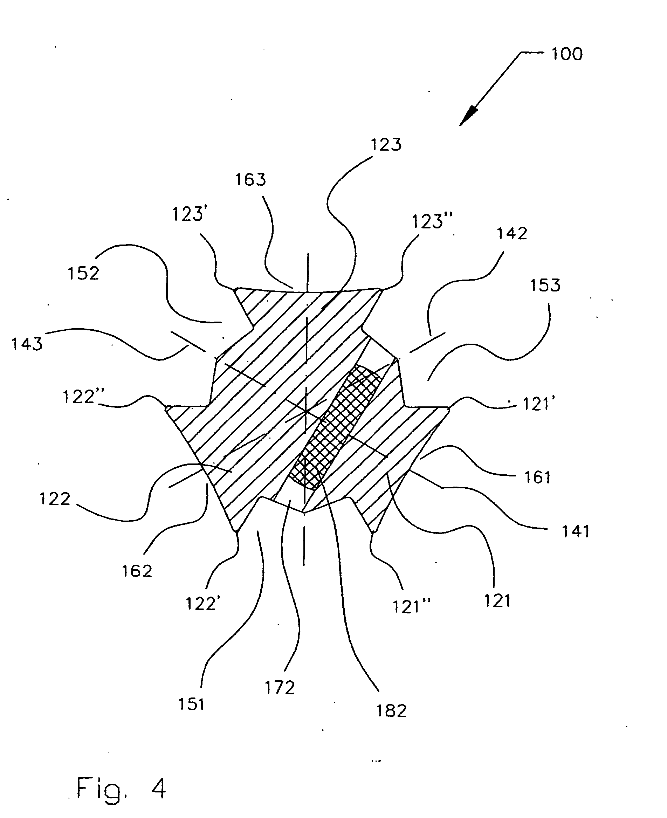

Bei der erfindungsgemäßen Reibahlen-Vorrichtung ist jede Schneidkante 121, 122, 123 in sich geradlinig ausgebildet, wobei jede Schneidkante 121, 122, 123 parallel zur Längsachse 130 des Schaftes 110 ausgebildet ist. Jeder Schneidstollen ist dabei symmetrisch bezüglich einer radialen Symmetrieachse 141, 142, 143 ausgebildet, wobei zwischen jeweils zwei sich gegenüberstehender Schneidkanten benachbarter Schneidstollen ein symmetrisch bezüglich einer radialen Symmetrieachse ausgebildeter Spannraum 151, 152, 153 vorgesehen ist, siehe auch Figur 4.

Wie ebenfalls auch aus Figur 4 ersichtlich ist zwischen jeweils zwei Schneidkanten des gleichen Schneidstollens ein symmetrisch bezüglich einer radialen Symmetrieachse 141, 142, 143 ausgebildeter Hinterschliff 161, 162, 163 vorgesehen, wobei die dargestellte Reibahlen-Vorrichtung 100 drei Schneidstollen 121, 122, 123 aufweist.

Zwei der Schneidstollen 121, 122 sind teilweise mit einer zur Längsachse 130 des Schaftes 110 parallelen, schlitzförmigen Aussparungen 171, 172 versehen, wobei die schlitzförmigen Aussparungen 171, 172 in Öffnungen münden, die an sich gegenüberstehenden Enden des Kopfes vorgesehenen sind. Die schlitzförmigen Aussparungen 171, 172 weisen dabei eine solche Länge auf, dass ein betreffender Schneidstollen durch Einführen eines entsprechend geformten hartelastischen Kunststoffmaterials 181, 182 in radialer Richtung des Schaftes 110 vorspannbar ist.

Der Durchmesser des Schaftes 110 ist teilweise geringer als der Durchmesser des Kopfes 120 ausgebildet, wobei der Kopf 120 an eine Stirnfläche 111 des Schaftes 110 angrenzt, wobei die Stirnfläche 111 in dem Randbereich, in dem sie in den Kopf 120 übergeht, abgerundet ausgebildet ist. Im Bereich seines der Stirnfläche 111 gegenüberliegenden Endes 112 ist der Kopf 120 ebenfalls abgerundet ausgebildet ist.

Das oben erläuterte Ausführungsbeispiel der Erfindung dient lediglich dem Zweck eines besseren Verständnisses der durch die Ansprüche definierten erfindungsgemäßen Lehre, die als solche durch das Ausführungsbeispiel nicht eingeschränkt ist.

## Patentansprüche

1. Reibahlen-Vorrichtung (100) mit einem Schaft (110) sowie einem in einem Umfangbereich des Schaftes ausgebildeten und eine Mehrzahl von Schneidzähnen (121-123) aufweisenden Kopf (120), wobei jeder Schneidzahn als jeweils mit zwei Schneidkanten (121',121"-123',123") versehener Schneidstollen ausgebildet ist, dessen jeweils eine Schneidkante rechtsdrehend und dessen jeweils andere Schneidkante linksdrehend ausgebildet ist, **dadurch gekennzeichnet, dass** zwei der Schneidstollen über einen Teil ihrer Länge mit jeweils einer zur Längsachse (130) des Schaftes (110) parallelen, schlitzförmigen Aussparung (171,172) versehen sind, wobei die schlitzförmigen Aussparungen in Öffnungen münden, die an sich gegenüberstehenden Enden des Kopfes vorgesehen sind.

2. Vorrichtung nach Anspruch 1, **dadurch gekennzeichnet, dass** jede Schneidkante geradlinig ausgebildet ist.

3. Vorrichtung nach Anspruch 2, **dadurch gekennzeichnet, dass** jede Schneidkante parallel zur Längsachse des Schaftes ausgebildet ist.

4. Vorrichtung nach einem der vorhergehenden Ansprüche, **dadurch gekennzeichnet, dass** jeder Schneidstollen symmetrisch bezüglich einer radialen Symmetrieachse ausgebildet ist.

5. Vorrichtung nach einem der vorhergehenden Ansprüche, **dadurch gekennzeichnet, dass** zwischen jeweils zwei sich gegenüberstehender Schneidkanten benachbarter Schneidstollen ein symmetrisch bezüglich einer radialen Symmetrieachse ausgebildeter Spannraum vorgesehen ist.

6. Vorrichtung nach einem der vorhergehenden Ansprüche, **dadurch gekennzeichnet, dass** zwischen jeweils zwei Schneidkanten des gleichen Schneidstollens ein symmetrisch bezüglich einer radialen Symmetrieachse ausgebildeter Hinterschliff vorgesehen ist.

7. Vorrichtung nach einem der vorhergehenden Ansprüche, **dadurch gekennzeichnet, dass** drei Schneidstollen vorgesehen sind.

8. Vorrichtung nach Anspruch 1, **dadurch gekennzeichnet, dass** die schlitzförmigen Aussparungen eine solche Länge aufweisen, dass ein betreffender Schneidstollen durch Einführen eines entsprechend geformten hartelastischen Kunststoffmaterials in radialer Richtung des Schaftes vorspannbar ist.

9. Vorrichtung nach einem der vorhergehenden Ansprüche, **dadurch gekennzeichnet, dass** der Durchmesser des Schaftes mindestens teilweise geringer als der Durchmesser des Kopfes ausgebildet ist.

10. Vorrichtung nach Anspruch 9, **dadurch gekennzeichnet, dass** der Kopf im Bereich eines Endes des Schaftes vorgesehen ist.

11. Vorrichtung Anspruch 10, **dadurch gekennzeichnet, dass** der Kopf an eine Stirnfläche des Schaftes angrenzt.

12. Vorrichtung Anspruch 11, **dadurch gekennzeichnet, dass** die Stirnfläche insbesondere in ihrem Randbereich, in dem sie in den Kopf übergeht, abgerundet ausgebildet ist.

13. Vorrichtung nach einem der Ansprüche 10 bis 12, **dadurch gekennzeichnet, dass** der Kopf im Bereich seines der Stirnfläche gegenüberliegenden Endes ebenfalls abgerundet ausgebildet ist.

## Claims

1. A reaming device (100) having a shaft (110) and a head (120) formed in a circumferential region of the shaft and exhibiting a plurality of cutting teeth (121-123), of which each cutting tooth is in the form of a cutting bar that is provided with two cutting edges (121', 121'' - 123', 123''), of which one is right-handed and the other left-handed, **characterized in that** two of the cutting bars are provide over part of the length thereof with slot-like recesses (171, 172) which are parallel to the longitudinal axis (130) of the shaft (110), which slot-like recesses end in openings disposed at opposite ends of the head.

2. A device as defined in claim 1, **characterized in that** each cutting edge is straight.

3. A device as defined in claim 2, **characterized in that** each cutting edge is parallel to the longitudinal axis of the shaft.

4. A device as defined in any one of the previous claims, **characterized in that** each cutting bar is symmetrical with reference to a radial axis of symmetry.

5. A device as defined in any one of the previous claims, **characterized in that** between two opposite cutting edges of adjacent cutting bars a bracing flute is provided that is symmetrically formed with reference to a radial axis of symmetry.

6. A device as defined in any one of the previous claims, **characterized in that** between two cutting edges of the same cutting bar there is provided a clearanhce which is symmetrically formed with reference to a radial axis of symmetry formed.

7. A device as defined in any one of the previous claims, **characterized in that** three cutting bars are provided.

8. A device as defined in claim 1, **characterized in that** said slot-like recesses have a length such that a relevant cutting bar can be biassed in the radial direction of the shaft by the introduction of an appropriately shaped semi-rigid plastics material.

9. A device as defined in any one of the previous claims, **characterized in that** the diameter of the shaft is, over at least part of its length, smaller than the diameter of the head.

10. A device as defined in claim 9, **characterized in that** the head is provided in the region of one end of the shaft.

11. A device as defined in claim 10, **characterized in that** the head adjoins an end face of the shaft.

12. A device as defined in claim 11, **characterized in that** the end face is rounded, particularly in the edge thereof forming a transition between said face and the head.

13. A device as defined in any one of claims 10 to 12, **characterized in that** the head is also rounded in the region of its end remote from said end face.

## Revendications

1. Dispositif d'alésoir (100) comprenant une tige (110) et une tête (120) s'étendant dans une zone périphérique de la tige 110 et présentant une pluralité de dents coupantes (121 - 123), chaque dent coupante étant réalisée en forme d'un arrêt muni de deux tranchants (121', 121", 123', 123"), dont l'un tranchant respectif est tournant à droite et dont l'autre tranchant respectif est tournant à gauche,
**caractérisé en ce que** deux arrêts sont munis chacun, sur une partie de leur longueur, d'un évidement à fente (171, 172) en parallèl à l'axe longitudinal (130) de la tige (110), ces évidements à fente débouchant dans des ouvertures prévues sur les extrémités opposées de la tête.

2. Dispositif selon la revendication 1,
**caractérisé en ce que** chaque tranchant est prévu en forme rectiligne.

3. Dispositif selon la revendication 2,
**caractérisé en ce que** chaque tranchant est formé en parallel par rapport à l'axe longitudinal de la tige.

4. Dispositif selon l'une quelconque des revendications préalables,
**caractérisé en ce que** chaque arrêt est formé de façon symétrique par rapport à un axe de symétrie radial.

5. Dispositif selon l'une quelconque des revendications préalables,
**caractérisé en ce qu'** un espace de serrage formé de façon symétrique par rapport à un axe de symétrie radial est prévu entre deux tranchants opposés respectifs des arrêts voisins.

6. Dispositif selon l'une quelconque des revendications préalables,
**caractérisé en ce que** une dépouille réalisée de façon symétrique par rapport à un axe de symétrie radial est prévue entre deux tranchants respectifs d'un même arrêt.

7. Dispositif selon l'une quelconque des revendications préalables,
**caractérisé en ce qu'** il y a trois arrêts prévus.

8. Dispositif selon la revendication 1,
**caractérisé en ce que** les évidements à fente présentent une longueur telle qu'un arrêt affecté peut être mis en précontrainte en direction radiale de la tige par introduction d'un matériau plastique dur élastique formé de façon appropriée.

9. Dispositif selon l'une quelconque des revendications préalables,
**caractérisé en ce que** le diamètre de la tige est prévu, au moins partiellement, d'être inférieur au diamètre de la tête.

10. Dispositif selon la revendication 9,
**caractérisé en ce que** ladite tête est disposée au niveau d'une extrémité de la tige.

11. Dispositif selon la revendication 10,
**caractérisé en ce que** ladite tête est disposée de façon aboutissant à une surface frontale de la tige

12. Dispositif selon la revendication 11,
**caractérisé en ce que** cette surface frontale est arrondie en particulier dans sa zone périphérique de transition envers la tête.

13. Dispositif selon l'une des revendications 10 à 12,
**caractérisé en ce que** le ladite tête est arrondie également à son extrémité opposée à la surface frontale.
